# FASCICULE DE BREVET EUROPEEN

(11) **EP 1 004 239 B1**
(45) Date de publication et mention de la délivrance du brevet: **17.09.2003**
(21) Numéro de dépôt: 99490038.9
(22) Date de dépôt: 25.11.1999
(51) Int. Cl.: A01K 97/10

(54) **Support pour canne à pêche resistant aux torsions**
Torsionsfester Angelrutenhalter
Torsion resistant rod rest

(30) Priorité: 27.11.1998 FR 9815153; 27.11.1998 FR 9815154
(43) Date de publication de la demande: 31.05.2000
(73) Titulaire: Amourelle, Olivier, 59100 Roubaix (FR)
(72) Inventeur: Amourelle, Olivier, 59100 Roubaix (FR)
(74) Mandataire: Matkowska, Franck

(56) Documents cités:
- EP-A- 0 860 113
- GB-A- 2 201 322
- GB-A- 2 232 863
- GB-A- 2 306 092
- GB-A- 2 313 030

## Description

La présente invention concerne un support pour canne à pêche qui présente une excellente résistance aux torsions lors de son utilisation.

Les supports pour canne à pêche sont utilisés par les pêcheurs pour la pêche au lancer, dite "au posé", qui consiste à envoyer au loin, l'extrémité de la ligne munie d'un appât qui est piqué sur un hameçon et à la ramener rapidement vers le rivage, au moyen d'un moulinet, lorsqu'un poisson semble avoir mordu à l'hameçon. En général, les pêcheurs utilisent simultanément plusieurs cannes à pêche munies de moulinets qui sont disposées, en attendant d'éventuelles touches, sur un support pour canne à pêche. Les cannes à pêche disposées sur ce support sont en général inclinées, la portion préhensible par le pêcheur étant orientée vers le sol de sorte que les forces exercées par les poissons sur l'hameçon sont plus facilement perceptibles.

Les supports pour canne à pêche sont, généralement, constitués d'une poutre centrale, sensiblement rectiligne, montée sur un pied et de deux éléments support qui sont montés de façon amovible, aux deux extrémités de la poutre centrale.

Chaque élément support est constitué d'une petite portion rectiligne se divisant en deux branches courbes qui forment pratiquement un angle droit avec la portion rectiligne et dans lesquelles coulissent des montants verticaux reliés par une barre transversale appelée couramment "buzz barre" et qui est équipée d'organes de support de la canne à pêche. Chaque montant vertical coulissant dans une branche de l'élément support, il est donc possible de régler la hauteur de la barre transversale.

En général, la portion rectiligne de chaque élément support est introduite dans la poutre centrale et une tige filetée qui traverse la poutre centrale permet de maintenir en place, par coincement, chacun des éléments support. En faisant coulisser la portion rectiligne dans la poutre centrale, il est possible de régler l'écartement des deux éléments support en fonction de la longueur des cannes à pêche utilisées.

Lorsque l'utilisateur déplace une canne à pêche ou lorsque un poisson tire sur la ligne d'une canne à pêche disposée sur ce type de support, les forces ainsi créées, génèrent des torsions au niveau des branches des éléments support et également au niveau du point d'attache de chaque élément support à la poutre centrale, c'est-à-dire au niveau de la tige filetée qui bloque les portion rectilignes des éléments support. Bien que les forces exercées soit faibles, leur point d'application étant fort éloigné de la poutre centrale, leur moment est conséquent et les torsions ainsi engendrées sont donc considérables.

Ces phénomènes de torsions créent des jeux au niveau des tiges filetées qui solidarisent les éléments support et la poutre centrale ; les cannes à pêche disposées sur un support endommagé sont donc trop facilement déstabilisées, au moindre mouvement de leur ligne, ce qui induit le pêcheur en erreur, en lui faisant prendre la moindre oscillation des cannes à pêche pour une touche. Pour pallier à ces phénomènes de torsions qui risquent d'endommager durablement la structure du support, on solidarise les deux branches des éléments support, l'une à l'autre, au moyen de tiges rigides qui sont disposées perpendiculairement aux branches de l'élément support. Ces tiges qui alourdissent la structure du support, permettent de limiter les torsions des branches mais restent inefficaces en ce qui concerne les torsions au niveau des tiges filetées qui solidarisent les éléments support et la poutre centrale. De ce fait, le support est bien souvent irrémédiablement détérioré au bout d'un certain temps d'utilisation.

Un premier but de la présente invention est de proposer un support pour canne à pêche apte à résister au forces de torsions susceptibles d'être engendrées lors de son utilisation.

Conformément à un premier mode de réalisation de l'invention, ce but est atteint au moyen d'un support pour une ou plusieurs cannes à pêche, du type comprenant, de manière connue, une poutre sur laquelle sont montés au moins deux éléments support d'une ou plusieurs cannes à pêche. De façon caractéristique, selon ce premier mode de réalisation, chaque élément support comporte une barre de renfort qui est transversale à la poutre, et qui est en contact avec une des faces inférieure ou supérieure de la poutre et au moins un montant rectiligne qui est monté sur la barre de renfort et qui est sensiblement perpendiculaire à la poutre ; la barre de renfort d'au moins l'un des éléments support étant montée coulissante par rapport à la poutre, selon l'axe longitudinal de la poutre et étant pourvue de moyens pour son blocage en position par rapport à la poutre.

Contrairement aux supports de l'art antérieur, dans le cas du support de l'invention, du fait que l'élément support comporte une barre de renfort et un montant sensiblement perpendiculaire à cette barre de renfort, les forces de torsions, engendrées lors de l'utilisation du support de l'invention, s'exercent sensiblement verticalement par rapport à la longueur de la barre de renfort, conférant ainsi au support de l'invention, une meilleure résistance aux torsions. En effet, les forces de torsions sont ainsi uniformément réparties sur toute la longueur de la barre de renfort ce qui diminue leur intensité par unité de surface.

Par ailleurs, la barre de renfort d'au moins un des éléments support étant coulissante sur la poutre, il est encore possible, comme dans l'art antérieur, de moduler l'écartement des éléments support en fonction de la longueur des cannes à pêche utilisées.

La structure de la poutre n'est pas limitative de l'invention. En effet, le support de la présente invention peut comporter une poutre constituée d'une seule ou de plusieurs parties assemblées, pleines ou au partiellement évidées.

Un autre but de l'invention est de proposer un support pour canne à pêche qui est susceptible d'être rendu compact lorsqu'il n'est pas utilisé.

Conformément à un second mode de réalisation, ce but est atteint au moyen d'un support qui de façon caractéristique comprend une poutre constituée d'un profilé central et deux bras latéraux, sensiblement rectilignes qui sont amovibles et/ou mobiles par rapport au profilé central en sorte de pouvoir être sensiblement superposés au profilé central et qui sont aptes à être positionnés dans le prolongement du profilé central.

Une telle structure permet d'obtenir un support très compact, lorsqu'il est démonté du fait, d'une part, de la forme rectiligne des bras latéraux qui peuvent facilement former avec le profilé central, lui-même rectiligne, par coulissement, emboîtement ou par pivotement, et donc peu encombrant. Par le terme "superposés", on entend, dans le cadre de la présente invention, que les bras latéraux peuvent, au moins être suffisamment rapprochés du profilé central en sorte de réduire l'espace total occupé par le support ; les bras latéraux peuvent également être, partiellement ou sur toute leur longueur, en contact avec le profilé central.

Selon une première variante de ce second mode de réalisation, chaque bras latéral est articulé par rapport au profilé central selon un axe de rotation transversal à l'axe longitudinal du profilé central, de telle sorte que chaque bras latéral peut être replié sur le profilé central. Selon la position de l'axe qui peut, traverser le profilé central ou être tangent à sa surface, les bras latéraux peuvent être totalement repliés sur le profilé central, éventuellement selon des sens de rotation opposés, ou être simplement rapprochés du profilé central.

Selon ce second mode de réalisation l'axe de rotation n'est pas limité. Cet axe peut prendre la forme d'une tige disposée sur ou sous le profilé central, en considérant le support dans sa position d'utilisation, ou d'une tige disposée dans l'épaisseur du profilé central, parallèle à sa largeur et coopérant avec des ouvertures adaptées, ménagées dans l'épaisseur du profilé central.

Selon une seconde variante de réalisation de ce second mode de réalisation, chaque bras latéral est articulé par rapport au profilé central au moyen de deux tétons qui coopèrent chacun avec une ouverture oblongue qui est ménagée dans l'épaisseur du profilé central, en sorte de permettre le coulissement du bras latéral par rapport au profilé central et de façon à rendre le bras latéral mobile en rotation par rapport au profilé central. Par ailleurs, lorsque cette ouverture oblongue débouche au niveau de l'extrémité du profilé central, les tétons peuvent être facilement désengagés de l'ouverture rendant ainsi les bras latéraux amovibles.

De préférence, ce second mode de réalisation comporte également des moyens de blocage des bras latéraux dans le prolongement du profilé central. Ces moyens de blocage peuvent, par exemple, être des plaques de butée qui, lorsque le bras latéral est mobile en rotation par rapport au profilé central, heurtent une surface du profilé central, limitant ainsi la course en rotation du bras latéral de sorte qu'à l'équilibre, les plaques de butée étant au contact du profilé central, les bras latéraux se trouvent dans le prolongement du profilé central. Par plaque de butée, on entend, dans le cadre de la présente invention, une pièce rapportée ou une portion du bras latéral qui est susceptible, par exemple, d'être creux.

Selon une variante préférée de réalisation de ces moyens de blocage, ils comprennent une plaque de butée solidaire du bras latéral et éventuellement, en fonction du sens de rotation du bras latéral, des moyens de pression de la plaque de butée sur le profilé central. En effet, lorsque le bras latéral est articulé en rotation en sorte que, sous l'effet de son propre poids, il vient se positionner dans le prolongement du profilé central, la plaque de butée sera placée de façon à ce que sous l'effet du poids du bras latéral, elle reste pressée contre le profilé central. En revanche, lorsque le bras latéral est pivotant de telle manière que, lorsqu'il est positionné dans le prolongement du profilé central, son propre poids l'entraîne en rotation jusqu'à sa position repliée, des moyens de pression de la plaque de butée contre le profilé central sont alors nécessaires. Ces moyens de pression ne sont pas limitatifs de l'invention.

Les bras latéraux peuvent être réalisés à partir de profilés pleins ou creux, partiellement creusés ou présentant des vides dans leur structure. Selon un mode particulier de réalisation du second mode de réalisation, chacun des bras latéraux comprend deux profilés qui sont sensiblement rectilignes et parallèles et qui sont écartés l'un de l'autre d'une distance supérieure à la largeur du profilé central. De préférence, selon ce mode de réalisation particulier, la distance séparant les deux profilés du bras latéral est légèrement supérieure à la largeur du profilé central en sorte que, une fois le bras latéral positionné et bloqué dans le prolongement du profilé central, ledit profilé central est emboîté entre les deux profilés du bras latéral, ce qui permet d'améliorer la rigidité des bras latéraux et donc leur résistance mécanique, en particulier leur résistance aux forces de torsions générées lors de la manipulation des cannes à pêche ou par un poisson qui tire sur la ligne d'une canne à pêche disposée sur le support de l'invention.

La présente invention sera mieux comprise et ses caractéristiques et avantages apparaîtront mieux à la lecture de la description qui suit et fait référence aux dessins annexés représentant le mode de réalisation préféré de la présente invention, présenté à titre d'exemple non limitatif, sur lesquels
- la figure 1 représente une vue générale du mode de réalisation préféré de l'invention;
- la figure 2 représente une vue en coupe verticale d'une variante de réalisation de l'élément support équipant le support représenté sur la figure 1;
- la figure 3 représente plus en détails, le profilé central du support de l'invention représenté sur les figures 1 et 2, lorsque celui-ci se trouve sensiblement dans sa configuration la moins encombrante ;
- la figure 4 représente une vue d'une variante de réalisation du mode de réalisation préféré de la présente invention, les bras latéraux étant partiellement repliés sur le profilé central.

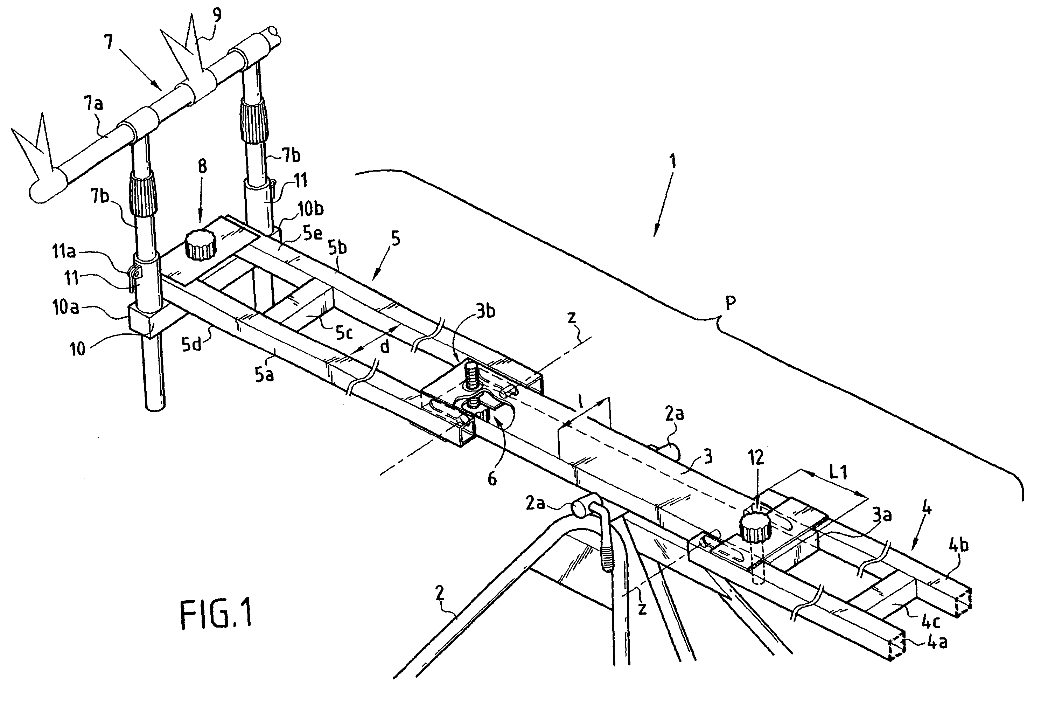

En référence à la figure 1, le support 1 de l'invention comporte un pied 2, monté de façon amovible sur le profilé central 3 de la poutre P, par l'intermédiaire de moyens de fixation 2a standards qui permettent de maintenir le profilé central 3, éventuellement dans une position inclinée. La poutre P est constituée d'un profilé central 3 sensiblement rectiligne et muni des deux bras latéraux 4 et 5 rectilignes qui sont articulés au niveau des extrémités 3a et 3b du profilé central par l'intermédiaire de moyens d'articulation 6 qui seront plus amplement décrits ultérieurement. Les deux extrémités 3a et 3b du profilé central 3 sont solidaires chacune d'un bras latéral 4 et 5. Les éléments support 7 comprennent une barre transversale 7a et deux montants verticaux 7b. La figure 1, ne représente qu'un seul élément support 7, celui équipant le bras latéral 5. Il est bien évident, que le bras latéral 4 peut être équipé d'un élément support similaire à l'élément support 7 dont la description va suivre en référence au bras latéral 4.

La barre transversale 7a de l'élément support 7 est équipée d'organes de support pour une ou plusieurs cannes à pêche 9. L'élément support 7 comporte également une barre de renfort 10. La barre de renfort 10 est disposée, en contact avec la face inférieure 5d du bras latéral 5 et est transversale au bras latéral 5. Chacune des deux extrémités 10a et 10b de la barre de renfort 10 est solidaire d'un montant vertical 7b qui se trouve être sensiblement perpendiculaire au bras latéral 5 de la poutre P, lorsque le bras latéral 5 est dans le prolongement du profilé central 3. La barre de renfort 10 comporte des moyens 8 pour son blocage en position sur la poutre P.

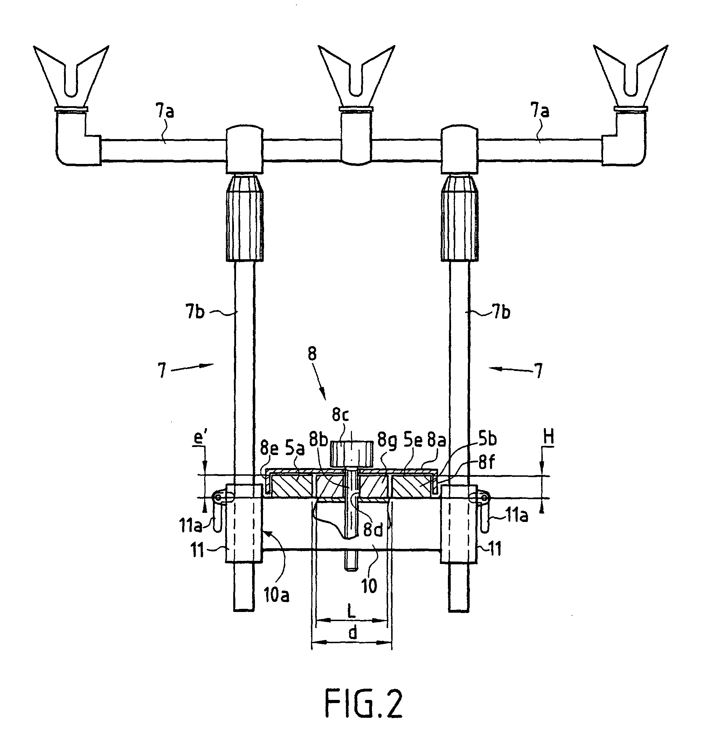

De préférence comme c'est le cas du mode de réalisation représenté sur les figures 1 et 2 chaque montant vertical 7b est solidarisé à une extrémité 10a, 10b de la barre de renfort 10 au moyen d'un manchon 11 dans lequel le montant 7b est monté coulissant. Afin de permettre un réglage en hauteur facile de la barre transversale 7a la barre de renfort 10 présente une longueur légèrement supérieure à la largeur du bras latéral 5 en sorte que les manchons 11 sont disposés de part et d'autre du bras latéral 5 de la poutre P. De cette façon, les montants 7b peuvent facilement coulisser dans les manchons 11. Les manchons 11 comportent également des moyens de blocage du montant 7b qui comprennent, par exemple, des leviers 11 a qui permettent de maintenir le montant 7b dans le manchon 11, par frottement entre la surface interne du manchon 11 et la surface externe du montant 7b. Avantageusement, les montants 7b sont conçus pour être amovibles des manchons 11.

Les bras latéraux 4 et 5 sont constitués de deux profilés respectivement 4a, 4b et 5a, 5b sensiblement rectilignes et parallèles (figure 1) et pourvus de tiges transverses de renfort 4c et 5c disposées vers l'extrémité libre de chacun des bras latéraux 4 et 5. Les profilés 4a, 4b, 5a et 5b sont éloignés d'une distance d supérieure ou égale à la largeur du profilé central 3. De préférence, la distance d sera très légèrement supérieure à la largeur du profilé central 3, pour emboîter correctement le profilé central 3 de façon à réduire les éventuelles forces de torsion qui peuvent s'exercer sur chacun des profilés 4a, 4b, 5a et 5b des bras latéraux 4 et 5.

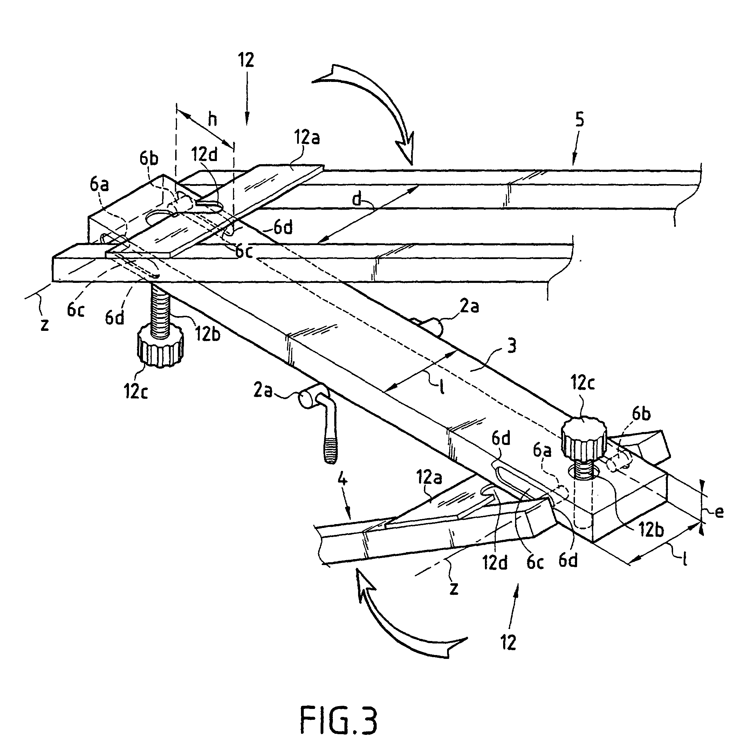

Selon une variante de ce mode de réalisation préféré chaque bras latéral 4 et 5 est articulé par rapport au profilé central 3 selon un axe de rotation z (figures 1 et 3), au moyens de deux tétons 6a et 6b (figure 3) formant les moyens d'articulation 6 . Chaque tétons 6a et 6b pénètre dans une ouverture oblongue 6c ménagée dans l'épaisseur e du profilé central 3. Les tétons 6a et 6b sont donc susceptibles de coulisser dans les ouvertures oblongues 6c, rendant ainsi le bras latéral 4, 5 mobile en translation par rapport au profilé central 3. Les tétons 6a et 6b peuvent être remplacés par une tige reliant les deux profilés 4a, 4b et 5a, 5b respectivement de chacun de bras latéraux 4 et 5. La longueur h des ouvertures oblongues 6c est telle que lorsque les bras latéraux 4 et 5 sont bloqués dans le prolongement du profilé central 3, les tétons 6a et 6b arrivant en butée contre l'extrémité 6d des ouvertures oblongues 6c qui est orientée vers le centre du profilé 3, le profilé 3 se trouve inséré sur une longueur L1 (figure 1), de l'ordre de 4cm à 5cm, entre les profilés respectivement 4a, 4b et 5a, 5b de chaque bras latéral 4 et 5 ce qui permet de renforcer la résistance mécanique, notamment aux torsions de chaque bras latéral.

En référence à la figure 3, les moyens de blocage 12 des bras latéraux dans le prolongement du profilé central 3 comprennent pour chaque bras latéral 4 ou 5, une plaque de butée 12a solidaire du bras latéral considéré et des moyens de pression de la plaque de butée 12a sur le profilé central 3 qui comprennent une tige fileté 12b qui coopère avec un filetage ménagé dans l'épaisseur du profilé central 3 ou avec un insert ou un écrou introduit dans le profilé central 3 et un organe de pression, par exemple, du type molette 12c. Le blocage de la plaque de butée 12a par la molette 12c peut être réalisé par coincement d'une faible portion périphérique de la plaque de butée 12a sous la molette 12c. Néanmoins, de préférence, la plaque de butée 12a comprend une découpe 12d apte à coopérer avec la tige filetée 12b. De cette manière, la pression est exercée sensiblement au centre de la plaque de butée 12a et le blocage du bras latéral 4 ou 5 dans le prolongement du profilé central 3 est donc renforcé. Il est également possible, sans sortir du cadre de la présente invention, d'utiliser des moyens de pression formant pince qui prennent en sandwich la plaque de butée 12a et le profilé central 3 de façon à maintenir la plaque de butée 12a contre le profilé central 3.

Lorsque les bras latéraux 4 et 5 sont bloqués dans le prolongement du profilé central 3, les tétons 6a et 6b sont placés en sorte que la tige filetée 12b soit introduite dans l'ouverture 12d (figure 1), la molette 12c est alors mise au contact avec la plaque de butée 12a par vissage de la tige fileté 12b. La molette 12c suffisamment pressée contre la plaque de butée 12a permet d'empêcher les bras latéraux 4 et 5 de se mouvoir soit en translation, soit en rotation par rapport au profilé central 3. De préférence, les tétons 6a et 6b sont mis en butée contre l'extrémité 6d de l'ouverture oblongue 6c de façon à maximiser la longueur L1 (figure 1) du profilé central 3 encastrée entre les profilés 4a, 4b et 5a, 5b des deux bras latéraux 4 et 5.

La combinaison de l'ouverture oblongue 6c avec la plaque de butée 12a permet d'utiliser des bras latéraux 4 et 5 ayant strictement la même structure, en dépit de leur sens de rotation opposés. Il en résulte deux avantages. Un premier avantage concerne le pêcheur qui, dans le cas de bras latéraux amovibles, peut remonter facilement le support de l'invention puisque les bras latéraux sont interchangeables. Le second avantage est une diminution du coût de fabrication du support de la présente invention.

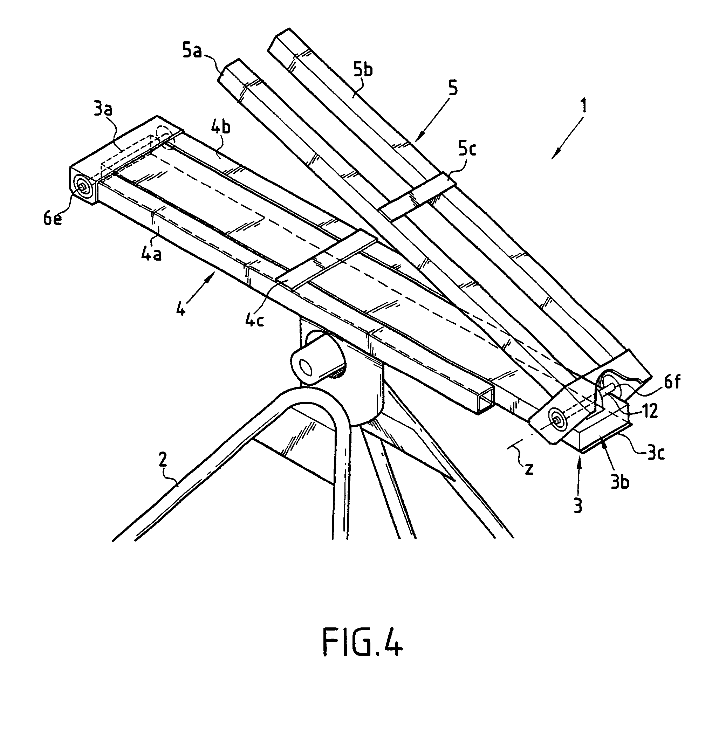

La variante de réalisation de la présente invention qui est représenté sur la figure 4, présente une articulation des bras latéraux réalisée au moyen de deux tiges 6e et 6f. Les éléments de cette variante de réalisation communs au premier mode de réalisation représenté sur les figures 1 et 2 sont référencés à l'identique. La tige 6a est intégrée à l'extrémité 3a du profilé central 3 et permet l'articulation du bras latéral 4 en sorte que lorsque le bras latéral 4 est replié sur le profilé central 3, les deux profilés 4a et 4b sont disposés de chaque coté de la longueur du profilé central 3. Le bras latéral 5 est articulé au moyen d'une tige 6f fixée sur le profilé central 3 de sorte que lorsque le bras latéral 5 est replié sur le profilé 3, il se trouve superposé selon toute sa longueur sur le profilé central 3.

Selon le mode de réalisation de la figure 4, chaque bras latéral 4, 5 est muni de moyens de blocage 12 dans le prolongement du profilé central 3 qui comprennent une plaque de butée 12a disposée en sorte que, lorsque chaque bras latéral est déplié et sous l'effet de son propre poids, la plaque de butée 12a qui est disposée à l'extrémité de chaque bras latéral 4 et 5 vient en butée contre le profilé central 3 ou contre une butée 3c solidaire de la face inférieure du profilé central 3, bloquant ainsi le bras latéral 4 ou 5 dans le prolongement du profilé central 3. L'avantage de ce second mode de réalisation est le fait de pouvoir entièrement replier les bras latéraux 4 et 5, sans démonter le pied 2 du support 1.

En référence aux figures 1 et 2, les moyens de blocage en position 8 de la barre de renfort 10 contre la poutre P comportent une plaque de renfort 8a disposée sur la face supérieure 5e du bras latéral 5 opposée à la face sur laquelle coulisse la barre de renfort 10 et qui recouvre au moins partiellement la largeur du bras latéral 5, de façon à bloquer correctement la barre de renfort 10 contre le bras latéral 5.

Les moyens de pression de la plaque de renfort 8a sur le bras latéral 5 comportent une tige fileté 8b (figure 2) qui solidarise la barre de renfort 10 et la plaque de renfort 8a et qui coopère avec une molette 8c et un filetage 8d ménagé dans l'épaisseur de la barre de renfort 10. La molette 8c, lorsqu'elle est vissée dans la barre de renfort 10, exerce une pression sur la plaque de renfort 8a qui maintient cette dernière appuyée contre le bras latéral 5. Il est également possible, lorsque la barre de renfort 10 ne présente pas une épaisseur interne suffisante de munir la tige filetée 8b d'un écrou ou d'une serrage rapide à excentrique.

De préférence, afin de mieux solidariser les profilés 5a et 5b du bras latéral 5 et d'augmenter le blocage de la barre de renfort 10 sur la poutre P, la plaque de renfort 8a est pourvue de bords 8e et 8f (figure 2) qui recouvrent au moins partiellement l'épaisseur e' des profilés 5a, 5b, servent de guide au coulissement de la barre de renfort 10 sur le bras latéral 5 et qui, également, empêchent toute rotation de la barre de renfort 10 par rapport au bras latéral

5 Une entretoise 8g (figure 2) est disposée entre les deux profilés 5a, 5b du bras latéral 5. Cette entretoise 8g présente une largeur L sensiblement égale à la distance d séparant les profilés 4a et 4b, et une hauteur H inférieure ou égale et, de préférence, sensiblement égale à l'épaisseur e' des profilés 5a, 5b. La présence de cette entretoise 8g permet de rigidifier le bras latéral 5 en formant une portion pleine, donc plus résistance aux torsions, au niveau de l'élément support 7, ce qui renforce encore l'action de la barre de renfort 10. L'entretoise 8g est solidaire de la plaque de renfort 8a et/ou de la barre de renfort 10. Il est également possible de disposer plusieurs entretoises 8g qui s'emboîtent les unes dans les autres en sorte de rigidifier le bras latéral 5. La présence de cette entretoise 8g n'empêche pas l'amovibilité de la barre de renfort de la poutre P. En effet, la barre de renfort 10 peut, dans tous les cas, lorsqu'elle est montée coulissante sur la poutre P, être désolidarisée de la poutre P par coulissement jusqu'à l'extrémité libre du bras latéral 5.

Selon l'invention, la disposition de la barre de renfort 10 et de la plaque de renfort 8a peut être inversée, c'est-à-dire que la barre de renfort 10 peut être disposée sur la face 5e du bras latéral 5. De même, il est possible d'adapter la disposition des différents éléments des premiers moyens de blocage 8 à un élément support 7 ne comportant qu'un montant rectiligne 7b.

## Revendications

1. Support (1) pour une ou plusieurs cannes à pêche, du type comprenant une poutre (P) sur laquelle sont montés au moins deux éléments support (7) d'une ou plusieurs cannes à pêche, **caractérisé en ce que** chaque élément support (7) comporte une barre de renfort (10) qui est transversale à la poutre (P) et qui est en contact avec une des faces inférieure (4d) ou supérieure (4e) de la poutre (P), et au moins un montant (7b) rectiligne qui est monté sur la barre de renfort (10) et qui est sensiblement perpendiculaire à la poutre (P), et **en ce que** la barre de renfort (10) d'au moins l'un des éléments support (7) est montée coulissante par rapport à la poutre (P) selon l'axe longitudinal de la poutre (P) et est pourvue de moyens de blocage (8) en position par rapport à la poutre (P).

2. Support (1) selon la revendication 1 **caractérisé en ce que** la poutre comprend
- un profilé central (3)
- deux bras latéraux (4, 5), sensiblement rectilignes qui sont amovibles et/ou mobiles par rapport au profilé central (3) en sorte de pouvoir être sensiblement superposés au profilé central (3), et qui sont aptes à être positionnés dans le prolongement du profilé central (3).

3. Support (1) selon la revendication 2, **caractérisé en ce que** chaque bras latéral (4, 5) est articulé par rapport au profilé central (3) selon un axe de rotation (z) transversal à l'axe longitudinal du profilé central (3) de telle sorte que chaque bras latéral (4, 5) peut être replié sur le profilé central (3) ou aligné dans le prolongement du profilé central.

4. Support (1) selon la revendication 2, **caractérisé en ce que** chaque bras latéral (4, 5) est articulé par rapport au profilé central (3) au moyen de deux tétons (6a, 6b) qui coopèrent chacun avec une ouverture oblongue (6c) qui est ménagée dans l'épaisseur (e) du profilé central (3) en sorte de permettre éventuellement le coulissement des bras latéraux (4, 5) par rapport au profilé central (3) et de façon à rendre chacun des bras latéraux (4, 5) mobile en rotation par rapport au profilé central (3).

5. Support selon l'une quelconque des revendications 2 à 4, **caractérisé en ce qu'**il comporte en outre des moyens de blocage (12) du bras latéral dans le prolongement dudit.profilé central (3), lesdits moyens comportant
- une plaque de butée (12a) solidaire du bras latéral (4, 5) ; et, éventuellement,
- des moyens de pression (12b, 12c, 12d) de la plaque de butée (12a) contre le profilé central (3).

6. Support (1) selon l'une quelconque des revendications 2 à 5, **caractérisé en ce que** chacun des bras latéraux (4, 5) comprend deux profilés (4a, 4b, 5a, 5b) qui sont sensiblement rectilignes et parallèles et qui sont écartés l'un de l'autre d'une distance (d).

7. Support selon la revendication 6, **caractérisé en ce que** la distance (d) séparant les deux profilés (4a, 4b, 5a, 5b) du bras latéral (4, 5) est légèrement supérieure à la largeur (I) du profilé central (3), en sorte que, une fois le bras latéral (4, 5) positionné et bloqué dans le prolongement du profilé central (3), ledit profilé central (3) est emboîté entre les deux profilés (4a, 4b, 5a, 5b) du bras latéral (4, 5).

8. Support (1) selon la revendication 6 ou 7 , **caractérisé en ce que** la base de renfort (10) comporte une entretoise (8g) qui est disposée entre les profilés parallèles (4a, 4b, 5a, 5b), la largeur (L) de l'entretoise (8g) étant sensiblement égale à la distance (d) séparant les deux profilés parallèles (4a, 4b, 5a, 5b)

9. Support (1) selon l'une quelconque des revendications 1 à 8, **caractérisé en ce que** l'élément support (7) est amovible de la poutre (P).

10. Support (1) selon l'une des revendications 1 à 9, **caractérisé en ce que** chaque élément support (7) comporte deux montants verticaux (7b), chacun des montant verticaux (7b) étant solidaire d'une extrémité (10a, 10b) de la barre de renfort (10).

11. Support (1) selon l'une des revendications 1 à 10, **caractérisé en ce que** la barre de renfort (10) comporte à chacune de ses extrémités (10a, 10b) un manchon (11) dans lequel un des montants (8) de l'élément support (7) est monté coulissant et qui est équipé de moyens de blocage (11a) du montant (8), lesdits manchons (11) étant disposés de part et d'autre de la poutre (P).

12. Support (1) pour canne à pêche selon l'une des revendications 1 à 11, **caractérisé en ce que** les moyens de blocage (8) en position de la barre de renfort (10) par rapport à la poutre (P) comportent une plaque de renfort (8a) disposée sur la face de la poutre (P) qui est opposée à la face de la poutre sur laquelle coulisse la barre de renfort (10) et des moyens de pression (8b, 8c) de la plaque de renfort (13) sur la poutre (P).

13. Support (1) selon la revendication 12, **caractérisé en ce que** la plaque de renfort (8a) comporte des bords (8e, 8f) qui recouvrent au moins partiellement l'épaisseur (e) de la poutre (P).

## Claims

1. Support (1) for one or more fishing rods, of the type comprising a beam (P) on which are mounted at least two support elements (7) for one or more fishing rods, **characterised in that** each support element (7) includes a reinforcing bar (10) which is transverse to the beam (P) and which is in contact with one of the lower (4d) or upper (4e) faces of the beam (P), and at least one rectilinear post (7b) which is mounted on the reinforcing bar (10) and which is approximately perpendicular to the beam (P), and **in that** the reinforcing bar (10) of at least one of the support elements (7) is mounted sliding relative to the beam (P) along the longitudinal axis of the beam (P) and is provided with means (8) for locking in position relative to the beam (P).

2. Support (1) according to claim 1, **characterised in that** the beam comprises:
- a central section (3);
- two lateral arms (4,5) which are substantially rectilinear and are detachable and/or mobile relative to the central section (3) so as to be able to be substantially superposed on the central section (3), and which are capable of being positioned in the extension of the central section (3).

3. Support (1) according to claim 2, **characterised in that** each lateral arm (4, 5) is articulated relative to the central section (3) along an axis of rotation (z) which is transverse to the longitudinal axis of the central section (3) in such a way that each lateral arm (4, 5) can be folded over the central section (3) or aligned in the extension of the central section.

4. Support (1) according to claim 2, **characterised in that** each lateral arm (4, 5) is articulated relative to the central section (3) by means of two lugs (6a, 6b) which each cooperate with an oblong opening (6c) which is provided in the thickness (e) of the central section (3) in such a way as to permit possibly the sliding of the two lateral arms (4, 5) relative to the central section (3) and so as to make each of the lateral arms (4,5) mobile in rotation relative to the central section (3).

5. Support according to any one of claims 2 to 4, **characterised in that** it also includes means (12) for locking the lateral arm in the extension of said central section (3), said means comprising:
- a stop plate (12a) immovably attached to the lateral arm (4,5); and, possibly,
- means (12b, 12c, 12d) for pressing the stop plate (12a) against the central section (3).

6. Support (1) according to any one of claims 2 to 5, **characterised in that** each of the lateral arms (4, 5) comprises two sections (4a, 4b, 5a, 5b) which are substantially rectilinear and parallel and which are spaced apart from one another by a distance (d).

7. Support according to claim 6, **characterised in that** the distance (d) separating the two sections (4a, 4b, 5a, 5b) of the lateral arm (4, 5) is slightly greater than the width (1) of the central section (3) so that, once the lateral arm (4, 5) is positioned and locked in the extension of the central section (3), said central section (3) fits between the two sections (4a, 4b, 5a, 5b) of the lateral arm (4, 5).

8. Support (1) according to claim 6 or 7, **characterised in that** the reinforcing base (10) includes a crosspiece (8g) which is disposed between the parallel sections (4a, 4b, 5a, 5b), the width (L) of the crosspiece (8g) being roughly equal to the distance (d) separating the two parallel sections (4a, 4b, 5a, 5b).

9. Support (1) according to any one of claims 1 to 8, **characterised in that** the support element (7) can be detached from the beam (P).

10. Support (1) according to one of claims 1 to 9, **characterised in that** each support element (7) includes two vertical posts (7b), each of the vertical posts (7b) being immovably attached to one end (10a, 10b) of the reinforcing bar (10).

11. Support (1) according to one of claims 1 to 10, **characterised in that** the reinforcing bar (10) includes at each of its ends (10a, 10b) a sleeve (11) in which one of the posts (8) of the support element (7) is mounted sliding and which is equipped with means (11a) for locking the post (8), said sleeves (11) being disposed on either side of the beam (P).

12. Fishing rod support (1) according to one of claims 1 to 11, **characterised in that** the means (8) for locking the reinforcing bar (10) in position relative to the beam (P) include a reinforcing plate (8a) disposed on the face of the beam (P) which is opposite the beam face on which the reinforcing bar (10) slides, and means (8b, 8c) for pressing the reinforcing plate (13) onto the beam (P).

13. Support (1) according to claim 12, **characterised in that** the reinforcing plate (8a) includes edges (8e, 8f) which cover at least partially the thickness (e) of the beam (P).

## Patentansprüche

1. Träger (1) für eine oder mehrere Angelruten des Typs, der einen Balken (P) umfasst, auf dem mindestens zwei Trägerelemente (7) einer oder mehrerer Angelruten befestigt sind, **dadurch gekennzeichnet, dass** jedes Trägerelement (7) eine Verstärkungsstange (10) aufweist, die quer zu dem Balken (P) verläuft und mit einer der Unter- oder Oberseiten (4d, 4e) des Balkens (P) in Kontakt steht und mindestens einen geradlinigen Ständer (7b) aufweist, der auf der Verstärkungsstange (10) befestigt ist und der im Wesentlichen senkrecht zu dem Balken (P) verläuft, und dass die Verstärkungsstange (10) mindestens eines der Trägerelemente (7) gleitend in bezug auf den Balken (P) entlang der Längsachse des Balkens (P) befestigt und mit Einrichtungen zur Arretierung (8) in einer Position in bezug auf den Balken (P) ausgestattet ist.

2. Träger (1) nach Anspruch 1, **dadurch gekennzeichnet, dass** der Balken umfasst:
- ein zentrales Profil (3);
- zwei seitliche Arme (4, 5), die im Wesentlichen geradlinig sind und in bezug auf das zentrale Profil (3) abnehmbar und/oder beweglich sind in der Weise, dass sie im Wesentlichen über dem zentralen Profil (3) angeordnet sein können, und die in der Verlängerung des zentralen Profils (3) positioniert sein können.

3. Träger (1) nach Anspruch 2, **dadurch gekennzeichnet, dass** jeder seitliche Arm (4, 5) mit dem zentralen Profil (3) entlang einer Rotationsachse (z) quer zur Längsachse des zentralen Profils (3) mittels eines Gelenks so verbunden ist, dass jeder seitliche Arm (4, 5) auf das zentrale Profil (3) zurückgeklappt oder in der Verlängerung des zentralen Profils ausgerichtet werden kann.

4. Träger (1) nach Anspruch 2, **dadurch gekennzeichnet, dass** jeder seitliche Arm (4, 5) mit dem zentralen Profil (3) mittels zweier Nippel (Ansatzkuppen) (6a, 6b) gelenkig verbunden ist, die jeweils mit einer länglichen Öffnung (6c) kooperieren, die in der Dicke (e) des zentralen Profils (3) so angeordnet ist, dass sie gegebenenfalls eine Verschiebung der seitlichen Arme (4, 5) gegenüber dem zentralen Profil (3) erlauben und jeden der seitlichen Arme (4, 5) drehbar im Verhältnis zu dem zentralen Profil (3) machen.

5. Träger nach einem der Ansprüche 2 bis 4, **dadurch gekennzeichnet, dass** er außerdem Einrichtungen zur Arretierung (12) des seitlichen Arms in der Verlängerung des zentralen Profils (3) aufweist, wobei diese Einrichtungen umfassen:
- eine Anschlagplatte (12a), die mit dem seitlichen Arm (4, 5) fest verbunden ist, und gegebenenfalls
- Einrichtungen (12b, 12c, 12d) zum Anpressen der Anschlagplatte (12a) an das zentrale Profil (3).

6. Träger (1) nach einem der Ansprüche 2 bis 5, **dadurch gekennzeichnet, dass** jeder der seitlichen Arme (4, 5) zwei Profile (4a, 4b, 5a, 5b) umfasst, die im Wesentlichen geradlinig und parallel sind und die einen Abstand (d) voneinander haben.

7. Träger nach Anspruch 6, **dadurch gekennzeichnet, dass** der die beiden Profile (4a, 4b, 5a, 5b) des seitlichen Arms (4, 5) trennende Abstand (d) etwas größer ist als die Breite (l) des zentralen Profils (3) in der Weise, dass dann, wenn der seitliche Arm (4, 5) einmal positioniert und in der Verlängerung des zentralen Profils (3) arretiert ist, das zentrale Profil (3) zwischen den beiden Profilen (4a, 4b, 5a, 5b) des seitlichen Arms (4, 5) eingeschlossen ist.

8. Träger (1) nach Anspruch 6 oder 7, **dadurch gekennzeichnet, dass** die Verstärkungsstange (10) ein Abstandsstück (8g) aufweist, das zwischen den parallelen Profilen (4a, 4b, 5a, 5b) angeordnet ist, wobei die Breite (L) des Abstandsstückes (8g) im Wesentlichen gleich dem Abstand (d) ist, der die beiden parallelen Profile (4a, 4b, 5a, 5b) voneinander trennt.

9. Träger (1) nach nach einem der Ansprüche 1 bis 8, **dadurch gekennzeichnet, dass** das Trägerelement (7) von dem Balken ((P) abnehmbar ist.

10. Träger (1) nach einem der Ansprüche 1 bis 9, **dadurch gekennzeichnet, dass** jedes Trägerelement (7) zwei vertikale Ständer (7b) umfasst, wobei jeder der vertikalen Ständer (7b) mit einem Ende (10a, 10b) der Verstärkungsstange (10) fest verbunden ist.

11. Träger (1) nach einem der Ansprüche 1 bis 10, **dadurch gekennzeichnet, dass** die Verstärkungsstange (10) an jedem ihrer Enden (10a, 10b) eine Muffe (11) aufweist, in der einer der Ständer (8) des Trägerelements (7) gleitend befestigt ist und die mit Einrichtungen (11a) zur Arretierung des Ständers (8) ausgestattet ist, wobei die Muffen (11) beiderseits des Balkens (P) angeordnet sind.

12. Träger (1) für eine Angelrute nach einem der Ansprüche 1 bis 11, **dadurch gekennzeichnet, dass** die Einrichtungen (8) zur Blockierung der Verstärkungsstange (10) in der richtigen Position in bezug auf den Balken (P) eine Verstärkungsplatte (8a), die auf der Seite des Balkens (P) angeordnet ist, die der Seite des Balkens gegenüberliegt, auf der die Verstärkungsstange (10) gleitet, und Einrichtungen (8b, 8c) zum Anpressen der Verstärkungsstange (13) an den Balken (P) umfassen.

13. Träger (1) nach Anspruch 12, **dadurch gekennzeichnet, dass** die Verstärkungsplatte (8a) Ränder (8e, 8f) aufweist, welche die Dicke (e) des Balkens (P) mindestens teilweise bedecken.
